# EUROPÄISCHE PATENTSCHRIFT

(11) **EP 3 359 420 B1**
(45) Veröffentlichungstag und Bekanntmachung des Hinweises auf die Patenterteilung: **06.11.2019**
(21) Anmeldenummer: 16770736.3
(22) Anmeldetag: 20.09.2016
(51) Int. Cl.: B60R 1/02, B60R 1/062

(54) **EINSTELLHILFE FÜR EINEN RÜCKSPIEGEL IN EINEM KRAFTFAHRZEUG**
ADJUSTMENT AID FOR A REARVIEW MIRROR IN A MOTOR VEHICLE
AIDE AU RÉGLAGE POUR UN RÉTROVISEUR DE VÉHICULE AUTOMOBILE

(30) Priorität: 09.10.2015 DE 102015219637
(43) Veröffentlichungstag der Anmeldung: 15.08.2018
(73) Patentinhaber: Continental Automotive GmbH, 30165 Hannover (DE)
(72) Erfinder: NIEMÖLLER, Meinrad, 35625 Hüttenberg-Rechtenbach (DE)
(86) Internationale Anmeldenummer: PCT/EP2016/072244
(87) Internationale Veröffentlichungsnummer: WO 2017/060069

(56) Entgegenhaltungen:
- EP-A2- 1 544 025
- DE-A1- 3 613 556
- DE-A1- 10 064 937
- DE-A1-102011 117 499
- KR-A- 20010 009 284
- US-A1- 2002 048 094
- US-A1- 2002 052 680

## Beschreibung

Die Erfindung betrifft eine Einstellhilfe für einen Rückspiegel in einem Kraftfahrzeug.

Der Rückspiegel in einem Kraftfahrzeug ermöglicht einem Fahrer bei korrekter Einstellung den Blick nach hinten durch das Heckfenster des Kraftfahrzeuges, um den rückwärtigen Verkehr zu beobachten. Die korrekte Einstellung des Rückspiegels ist von der Sitzposition und der Körpergröße des Fahrers abhängig und sollte von jedem Fahrer vor Beginn einer Fahrt überprüft bzw. eingestellt werden. Bei korrekter Einstellung ist die Sicht nach hinten geringstmöglich durch einen Heckscheibenrahmen oder die Rückenlehne einer Rücksitzbank bzw. deren Kopfstützen, sofern vorhanden, beeinträchtigt.

Bei Dunkelheit, z. B. in einer dunklen Garage oder einer unbeleuchteten Straße, kann der Vorgang des Einstellens des Rückspiegels dadurch beeinträchtigt sein, dass der Heckscheibenrahmen sich nicht deutlich genug von der Sicht aus dem Heckfenster abhebt, so dass der Rückspiegel vor Beginn einer Fahrt nicht korrekt eingestellt ist.

Um dieses Problem zu lösen kann der Fahrer zum Einstellen des Rückspiegels die Innenbeleuchtung seines Fahrzeuges einschalten, so dass sich der Heckscheibenrahmen besser von der dunklen, durch das Heckfenster sichtbaren Umgebung abhebt. Diese Lösung hat jedoch den Nachteil, dass die Augen des Fahrers nach dem Abschalten der Innenbeleuchtung eine gewisse Zeit benötigen, um sich wieder an die Dunkelheit zu gewöhnen. Während dieser Zeit könnten Gefahrensituationen unter Umständen nicht rechtzeitig erkannt werden. Außerdem sind damit zusätzliche Handgriffe verbunden, denen unter Umständen auch noch eine Suche nach dem Lichtschalter vorausgeht, z. B. wenn ein Fahrer ein Fahrzeug das erste Mal benutzt.

Alternativ kann der Fahrer, sobald nach Beginn der Fahrt genügend Licht von anderen Quellen vorhanden ist, z. B. von Straßenlaternen oder anderen Fahrzeugen, und er feststellt, dass der Rückspiegel nicht korrekt eingestellt ist, den Einstellvorgang wiederholen. Dies bringt jedoch, insbesondere bei wechselnden Lichtverhältnissen während der Fahrt, eine Ablenkung des Fahrers mit sich, die ebenfalls dazu führen kann, dass Gefahrensituationen unter Umständen nicht rechtzeitig erkannt werden.

Aus der nächstliegenden US 2002/052680 A1 ist eine Einstellhilfe für einen Seitenspiegel eines Kraftfahrzeugs bekannt, wobei am Heck des Kraftfahrzeugs Beleuchtungsmittel vorhanden sind, die über einen Schalter eingeschaltet werden können und die Spiegeleinstellung erleichtern.

Aus der US 2002/048094 A1 ist eine Einstellhilfe für einen Rückspiegel bekannt, bei der ein Beleuchtungsmittel im Rückspiegel durch ein Aktivierungsereignis eingeschaltet wird. Das Aktivierungsereignis kann beispielsweise das Erkennen eines Passagiers auf dem Fahrersitz sein.

Aus der KR 2001 0009284 A ist es bekannt die Rückspiegel automatisch zu justieren nachdem sich die Position des Fahrers geändert hat.

Aus der EP 1 544 025 A2 ist die automatische Einstellung der Sitze und Rückspiegel bekannt.

Die in den Patentansprüchen angegebene Erfindung erleichtert die Einstellung von Rückspiegeln in Kraftfahrzeugen in der Dunkelheit.

Eine erfindungsgemäße Einstellhilfe für einen Rückspiegel in einem Kraftfahrzeug sieht ein oder mehrere Beleuchtungsmittel vor, die in räumlicher Nähe zu einem oder mehreren Rändern eines Heckfensters des Kraftfahrzeugs oder am Heck des Kraftfahrzeugs angeordnet sind. Das oder die Beleuchtungsmittel sind dergestalt angeordnet, dass, wenn sich das Kraftfahrzeug in einer dunklen Umgebung befindet und das oder die Leuchtmittel eingeschaltet sind, sich der Rand des Heckfensters oder eine seitliche Kontur des Kraftfahrzeugs bei einem Blick in den Rückspiegel von der Umgebung hinter dem Kraftfahrzeug zumindest bereichsweise abhebt. Außerdem ist ein erstes Mittel vorgesehen, welches das oder die Beleuchtungsmittel während der Einstellung automatisch einschaltet, wenn eine Einstellung des Rückspiegels erforderlich wird, wobei die Einstellung des Rückspiegels als erforderlich angenommen wird, wenn eine Veränderung der Einstellung des Fahrersitzes erkannt wurde.

In einem Ausführungsbeispiel sind das oder die Beleuchtungsmittel in der Nähe des Rahmens der Heckscheibe oder am Rahmen angebrachte Positionslichter, z. B. kleine Lämpchen oder Leuchtdioden, und der Rückspiegel ist an oder in der Nähe der Windschutzscheibe angebracht. Die Positionslichter leuchten vorzugsweise in roter Farbe, weil rotes Licht die Anpassung des menschlichen visuellen Systems an das Sehen in der Dunkelheit vergleichsweise wenig beeinträchtigt. Bei korrekter Einstellung des Rückspiegels sind alle Positionslichter im Rückspiegel sichtbar. Wenn beispielsweise vier Positionslichter in den vier Ecken des Heckfensters vorgesehen sind sollten die vier Positionslichter bei korrekter Einstellung im Rückspiegel sichtbar sein.

In einem anderen Ausführungsbeispiel wird eine Innenraumbeleuchtung des Kraftfahrzeugs bei der Einstellung des Rückspiegels automatisch eingeschaltet. Vorzugsweise wird nur eine hintere Innenraumbeleuchtung eingeschaltet. Dadurch wird der Rahmen des Heckfensters beleuchtet, während die rückwärtige Umgebung des Kraftfahrzeugs weiterhin dunkel bleibt, so dass sich der Rand des Heckfensters deutlich abzeichnet. Bei korrekter Einstellung des Rückspiegels ist der gesamte Rand des Heckfensters im Rückspiegel zu sehen. Wenn die Farbe der Innenraumbeleuchtung einstellbar ist, kann während der Einstellung des Rückspiegels eine vorteilhafte rote Farbe eingestellt werden. Ferner ist es möglich, bei der Einstellung des Rückspiegels die Innenraumbeleuchtung mit verminderter Helligkeit einzuschalten, um die Anpassung der Augen an die Dunkelheit nach erfolgter Einstellung zu beschleunigen.

In einem weiteren Ausführungsbeispiel werden ein oder mehrere am Heck des Fahrzeugs befindliche Beleuchtungsmittel bei der Einstellung des Rückspiegels automatisch eingeschaltet. Dadurch wird die Umgebung hinter dem Fahrzeug beleuchtet, während das Innere des Fahrzeugs weiterhin dunkel bleibt, so dass sich der Rand des Heckfensters deutlich abzeichnet. Bei korrekter Einstellung des Rückspiegels ist der gesamte Rand des Heckfensters im Rückspiegel zu sehen.

Das oder die Beleuchtungsmittel können speziell für die Einstellung des Rückspiegels vorgesehene Beleuchtungsmittel sein. Es ist jedoch auch möglich, am Fahrzeug ohnehin vorhandene Beleuchtungsmittel zu verwenden. So können beispielsweise Rückfahrscheinwerfer, Schluss- oder Bremsleuchten, oder Fahrtrichtungsanzeiger am Heck des Fahrzeugs zur Beleuchtung der rückwärtigen Umgebung des Fahrzeugs während der Einstellung des Rückspiegels eingeschaltet werden. In der Regel wird mit einzelnen oder mehreren der vorstehend genannten, ohnehin am Fahrzeug vorhandenen Beleuchtungsmittel eine ausreichende Beleuchtungshelligkeit der rückwärtigen Fahrzeugumgebung erreicht, damit sich der Rand des Heckfensters deutlich abzeichnet. Der Effekt wird noch verstärkt, wenn sich Objekte hinter dem Fahrzeug befinden die zumindest einen Teil des von dem oder den Beleuchtungsmitteln abgestrahlten Lichts reflektieren, beispielsweise eine Garagenwand, ein Zaun, oder Büsche.

Bei erfindungsgemäßer Verwendung von am Heck des Fahrzeugs ohnehin vorhandener Beleuchtungsmittel wie vorstehend beschrieben ist es möglich, neben einem an einer Frontscheibe im Innern des Fahrzeugs angebrachten Rückspiegel auch seitlich außen am Fahrzeug angebrachten Rückspiegel anhand der sich von der beleuchteten Umgebung abhebenden seitlichen Kontur des Fahrzeugs einzustellen. Es ist natürlich auch möglich, für die Einstellung der seitlichen außen am Fahrzeug angebrachten Rückspiegel spezielle Beleuchtungsmittel an geeigneter Stelle vorzusehen.

Das erste Mittel zur automatischen Einschaltung des oder der Beleuchtungsmittel während der Einstellung kann beispielsweise einen Sensor umfassen, der eine Berührung des Rückspiegels durch den Fahrer erkennt. Hierbei wird in vorteilhafter Weise die Tatsache genutzt, dass bei im Innenraum des Fahrzeugs angebrachten Rückspiegeln der Fahrer die Verstellung manuell vornehmen wird und den Rückspiegel dazu anfassen muss.

In einem Ausführungsbeispiel ist der Sensor ein kapazitiver Berührungssensor. In einem anderen Ausführungsbeispiel ist der Sensor ein optischer Annäherungssensor. Optische Annäherungssensoren sind beispielsweise von Mobiltelefonen bekannt, wo sie zur Abschaltung des Displays genutzt werden, wenn der Benutzer das Telefon während des Telefonats an sein Ohr hält.

In einem weiteren Ausführungsbeispiel ist der Sensor durch einen oder mehrere Schalter gebildet, der oder die so angebracht sind, dass eine den Rückspiegel zum Verstellen greifende Hand mindestens einen der Schalter betätigt.

Das erste Mittel zur automatischen Einschaltung des oder der Beleuchtungsmittel während der Einstellung kann auch einen Sensor umfassen, der eine Berührung oder Betätigung einer Einstelleinrichtung oder Fernbedieneinrichtung für den Rückspiegel durch den Fahrer erkennt. Dieses Ausführungsbeispiel ist besonders vorteilhaft, wenn der Rückspiegel sich außen am Kraftfahrzeug befindet und mittels einer mechanischen oder elektrischen Fernbedienung aus dem Innern des Kraftfahrzeugs verstellbar ist. Die Berührung der Einstelleinrichtung oder Fernbedieneinrichtung kann mit denselben Mitteln erfolgen wie die vorstehend beschriebene Erkennung einer den Rückspiegel berührenden oder greifenden Hand.

In einem Ausführungsbeispiel wird dem ersten Mittel zur automatischen Einschaltung des oder der Beleuchtungsmittel während der Einstellung des Rückspiegels ein durch Betätigung einer entsprechenden elektrischen Einstelleinrichtung oder Fernbedieneinrichtung erzeugtes elektrisches Signal zugeführt. Das Signal wird typischerweise einem von mehreren Richtungssignalen für einen Stellantrieb am Rückspiegel entsprechen. Da eine Stellrichtung für das Einschalten der Beleuchtung ohne Belang ist, ist es vorteilhaft, wenn die Richtungssignale logisch ODER-verknüpft werden. Das oder die Signale lösen das Einschalten des oder der Beleuchtungsmittel aus. Zweckmäßigerweise sollten das oder die Beleuchtungsmittel erst einen bestimmten Zeitraum nach dem Ausbleiben des oder der Signale ausgeschaltet werden. Dadurch kann ein störendes schnell aufeinanderfolgendes Ein- und Ausschalten des oder der Beleuchtungsmittel vermieden werden, wenn zwischen einzelnen Einstellvorgängen des Rückspiegels kurze Pausen liegen.

Grundsätzlich kann das Ausschalten des oder der Beleuchtungsmittel in jedem der Ausführungsbeispiele während eines Zeitraums nach erfolgter Einstellung des Rückspiegels verzögert erfolgen. Dadurch wird dem Fahrer Zeit gegeben, die Einstellung nach dem Einnehmen einer für das Fahren günstigen Sitzposition zu kontrollieren, falls das Einstellen des Rückspiegels nicht aus einer solchen Position erfolgen kann.

In einem Ausführungsbeispiel werden das oder die Beleuchtungsmittel automatisch eingeschaltet, wenn eine dazu vorgesehene Erkennungsvorrichtung erkennt, dass ein aktueller Fahrer ein anderer ist als der Fahrer, der das Kraftfahrzeug zuvor gefahren hat. Dabei können in einer Variante das oder die Beleuchtungsmittel erst dann ausgeschaltet werden, wenn der aktuelle Fahrer den Rückspiegel neu eingestellt hat, oder die korrekte Einstellung der Erkennungsvorrichtung durch ein Signal bestätigt hat.

Unterschiedliche Fahrer können beispielsweise erkannt werden, wenn eine Einstellung des Fahrersitzes geändert wird. In diesem Fall wird in der Regel auch eine Einstellung des Rückspiegels erforderlich sein. Eine Änderung der Sitzposition kann besonders einfach erkannt werden, wenn die Sitzverstellung elektrisch erfolgt. Aus den Steuersignalen für Stellmotoren und Aktuatoren der Sitzverstellung ist ein entsprechendes Signal leicht zu erzeugen.

Unterschiedliche Fahrer können auch über jeweils individuellen Fahrern zugewiesene unterschiedliche alphanumerische Codes, welche nach Eingabe in ein Eingabegerät an das Steuergerät übermittelt werden, jeweils individuellen Fahrern zugewiesene codierte Schlüssel oder Sender, welche mit dem Steuergerät kommunizieren, oder über eine Erkennung biometrischer Merkmale der Fahrer erkannt werden. Die Erkennung biometrischer Merkmale umfasst z. B. eine Gesichtserkennung, welche mittels einer Kamera durchgeführt wird. Eine zur Erkennung von Müdigkeit des Fahrers ohnehin im Kraftfahrzeug vorgesehene Kamera kann beispielsweise auch für diesen Zweck eingesetzt werden. Die Erkennung biometrischer Merkmale umfasst ferner eine Stimmenerkennung, oder eine Erkennung des Gewichts oder der Größe des Fahrers. Mehrere der vorstehend exemplarisch genannten Erkennungsarten können beliebig miteinander kombiniert werden, um die Erkennungsgenauigkeit zu erhöhen.

Eine mit der vorstehend beschriebenen Gewichtserkennung verwandte Ausgestaltung der Erfindung, welche mit jedem der vorliegenden Ausführungsbeispiele kombiniert werden kann, schaltet das oder die Beleuchtungsmittel unabhängig von anderen dazu vorgesehenen Signalen nur dann ein, wenn der Fahrersitz mit einem Mindestgewicht belastet ist. So kann ein unnötiges, beispielsweise durch ein Schließen der Tür ausgelöstes Einschalten des oder der Beleuchtungsmittel vermieden werden und dadurch Energie eingespart werden. Die Erkennung einer Mindestbelastung kann durch eine im Kraftfahrzeug ohnehin vorhandene Sitzbelegungserkennung erfolgen, welche häufig zur Erinnerung an das Anlegen eines Sicherheitsgurtes vorgesehen ist.

Ein automatisches Einschalten und zeitgesteuertes Abschalten der Beleuchtungsmittel nach dem Schließen einer Fahrertür, nach dem Stecken oder Drehen eines Zündschlüssels, oder nach dem Betätigen eines Starterknopfs für den Motor ist ebenfalls denkbar, insbesondere wenn für die Einstellung des Rückspiegels spezielle Beleuchtungsmittel vorgesehen sind, oder Leuchten am Heck des Fahrzeugs zu diesem Zweck eingeschaltet werden. Das Drehen des Zündschlüssels oder das Betätigen des Starterknopfs für den Motor kann in einer Variante dazu führen, dass ein nach dem Schließen der Fahrertür automatisch eingeschaltetes Beleuchtungsmittel wieder ausgeschaltet wird. In dieser Variante kann eine Zeitgesteuerte Abschaltung entfallen.

In einer Ausgestaltung der Erfindung, die mit jedem der vorliegenden Ausführungsbeispiele kombinierbar ist, werden das oder die Beleuchtungsmittel nur dann eingeschaltet, wenn die Umgebungshelligkeit unter einem bestimmten Wert liegt. Die Umgebungshelligkeit kann beispielsweise mit einem oder mehreren Lichtsensoren erfasst werden. Solche Sensoren sind bei vielen Kraftfahrzeugen bereits für die automatische Schaltung des Abblendlichts vorhanden und können für die Erfindung verwendet werden.

In einer anderen Ausgestaltung der Erfindung, die mit jedem der vorliegenden Ausführungsbeispiele kombinierbar ist, werden das oder die Beleuchtungsmittel nur dann eingeschaltet, wenn die Geschwindigkeit des Kraftfahrzeugs unterhalb einem bestimmten Wert liegt. Die aktuelle Geschwindigkeit kann beispielsweise vom Geschwindigkeitsmesser an das erste Mittel übermittelt werden. Alternativ kann die Einschaltung des oder der Beleuchtungsmittel ausschließlich bei stehendem Motor erfolgen, wobei auch in diesem Fall entsprechende Steuersignale an das erste Mittel übermittelt werden, z. B. von einem Motorsteuergerät. Diese Ausgestaltung dient dabei auch dazu, eine Störung oder Irritation von hinter dem Fahrzeug fahrenden Verkehrsteilnehmern zu vermeiden, insbesondere wenn die Beleuchtungsmittel durch die am Fahrzeug vorhandenen Bremsleuchten, Rückfahrscheinwerfer und/oder Fahrtrichtungsanzeiger gebildet werden.

Im Folgenden wird die Erfindung anhand der Figuren der Zeichnung beschrieben. In der Zeichnung zeigt:
- Fig. 1: eine schematische beispielhafte Anordnung von Beleuchtungsmitteln an einer Heckscheibe eines Kraftfahrzeugs als Einstellhilfe für einen Rückspiegel;
- Fig. 2: eine beispielhafte erfindungsgemäße Verwendung von an einem Kraftfahrzeug vorhandenen Beleuchtungsmitteln als Einstellhilfe für einen Rückspiegel;
- Fig. 3: eine erste vereinfachte schematische Darstellung der Sicht auf erfindungsgemäße Beleuchtungsmittel durch einen Rückspiegel;
- Fig. 4: eine zweite vereinfachte schematische Darstellung der Sicht auf erfindungsgemäße Beleuchtungsmittel durch einen Rückspiegel; und
- Fig. 5: ein vereinfachtes Blockdiagramm einer erfindungsgemäßen Steuerschaltung.

In den Figuren sind gleiche oder ähnliche Elemente mit denselben Referenznummern bezeichnet.

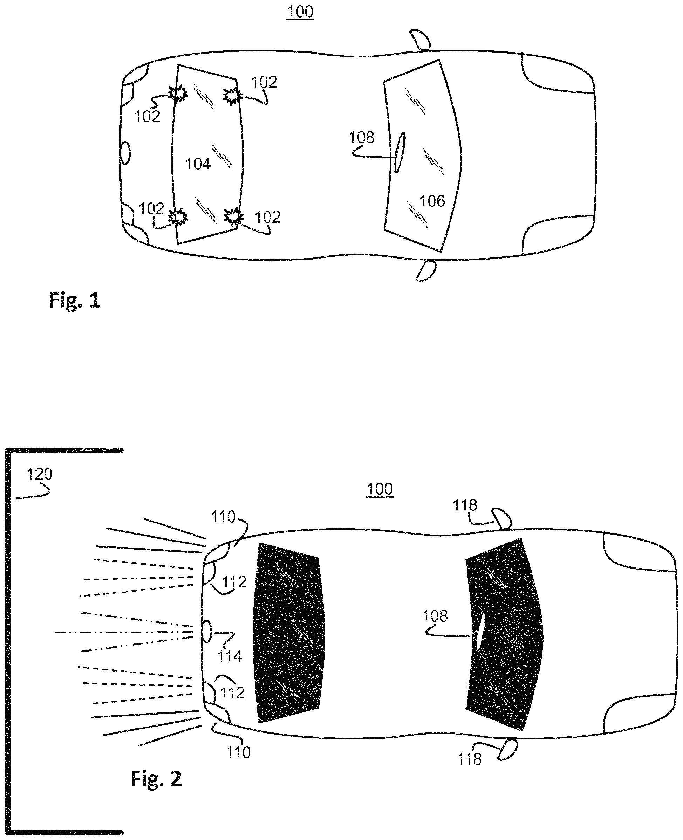

Figur 1 zeigt eine schematische beispielhafte Anordnung von Beleuchtungsmitteln 102 an einer Heckscheibe 104 eines Kraftfahrzeugs 100 als Einstellhilfe für einen im Innern des Kraftfahrzeugs an einer Frontscheibe 106 angebrachten Rückspiegel 108. Beim Blick in den korrekt eingestellten Rückspiegel 108 sollte ein in der Figur nicht dargestellter Fahrer die vier Beleuchtungsmittel 102 an entsprechender Position im Rückspiegel erkennen können. Anderenfalls muss der Fahrer den Rückspiegel entsprechend einstellen.

Figur 2 zeigt eine beispielhafte erfindungsgemäße Verwendung von am Heck eines Kraftfahrzeugs 100 vorhandenen Beleuchtungsmitteln als Einstellhilfe für den Rückspiegel 108. Die Beleuchtungsmittel umfassen in der beispielhaften Darstellung hintere Fahrtrichtungsanzeiger 110, Bremsleuchten 112 und einen Rückfahrscheinwerfer 114. Eines oder mehrere der Beleuchtungsmittel 110, 112 und 114 werden gemäß der Erfindung eingeschaltet, wenn der in der Figur nicht dargestellte Fahrer den Rückspiegel 108 einstellt. Das von den Beleuchtungsmitteln 110, 112 und 114 abgestrahlte Licht wird in der Figur von einem hinter dem Fahrzeug befindlichen Objekt 120 teilweise reflektiert (Reflexion nicht dargestellt). Das Objekt 120 sind beispielsweise in der Figur nur teilweise dargestellte hintere und seitliche Garagenwände. In dieser Ausführung der Erfindung können auch die seitlich am Äußeren des Fahrzeugs angebrachten Rückspiegel 118 eingestellt werden, da sich die seitliche Kontur des Fahrzeugs von der beleuchteten hinteren Umgebung abhebt.

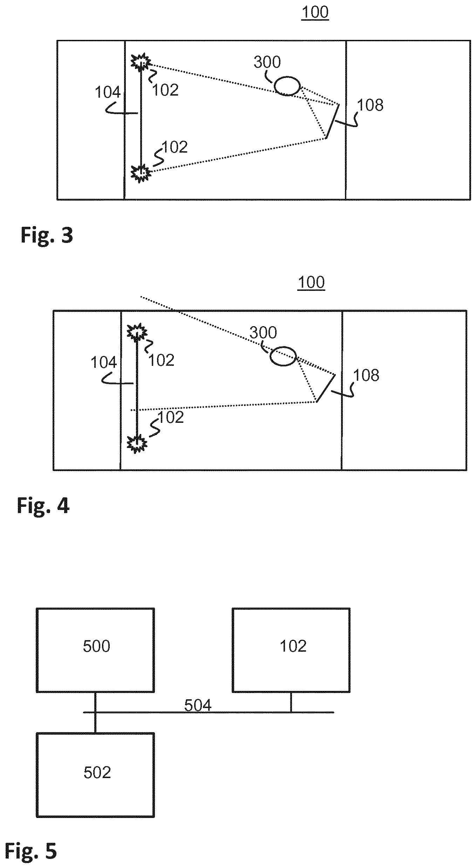

Figur 3 zeigt eine erste vereinfachte schematische Darstellung der Sicht auf erfindungsgemäße Beleuchtungsmittel durch einen Rückspiegel. Das in der Figur gezeigte Ausführungsbeispiel ähnelt dem in der Figur 1 gezeigten. Das Kraftfahrzeug 100 ist in der Figur nur sehr grob schematisch als Rechteck dargestellt, ebenso ist der Rückspiegel 108 nur als schräg liegender Strich wiedergegeben, und das Heckfenster 104 als senkrechter Strich. In der Figur sind nur zwei Beleuchtungsmittel 102 dargestellt. In der Figur ist der Rückspiegel 108 korrekt eingestellt, und ein Fahrer 300 sieht beim Blick in den Rückspiegel 108 die an oder in der Nähe der Kanten des Heckfensters 104 angebrachten Beleuchtungsmittel 102 an entsprechender Stelle im Rückspiegel 108. Das Blickfeld des Fahrers 300 durch den Rückspiegel 108 ist in der Figur durch gepunktete Linien angedeutet.

Figur 4 zeigt eine zweite vereinfachte schematische Darstellung der Sicht auf erfindungsgemäße Beleuchtungsmittel durch einen Rückspiegel. Die Darstellung entspricht im Wesentlichen der Darstellung in der Figur 3. In der Figur ist der Rückspiegel 108 nicht korrekt eingestellt, und ein Fahrer 300 sieht beim Blick in den Rückspiegel 108 nur eines der an oder in der Nähe der Kanten des Heckfensters 104 angebrachten Beleuchtungsmittel 102. Das Blickfeld des Fahrers 300 durch den Rückspiegel 108 ist auch in dieser Figur durch gepunktete Linien angedeutet. Es ist klar zu erkennen, dass nur das in der Figur oben angeordnete Beleuchtungsmittel 102 für den Fahrer im Rückspiegel zu sehen ist.

Figur 5 zeigt ein vereinfachtes Blockdiagramm einer erfindungsgemäßen Einstellhilfe. Ein oder mehrere Beleuchtungsmittel 102 sind mit einem Steuergerät 500 und einem Sensor 502 kommunikativ verbunden. Das Steuergerät 500 und der Sensor 502 bilden ein erstes Mittel, welches das oder die Beleuchtungsmittel während der Einstellung des in der Figur nicht dargestellten Rückspiegels automatisch einschaltet. Der Sensor 502 ist dabei dazu eingerichtet, festzustellen, wenn ein Fahrer (nicht gezeigt) den Rückspiegel oder eine Einrichtung zur Einstellung des Rückspiegels (nicht gezeigt) ergreift, um den Rückspiegel einzustellen, und gibt entsprechende Daten an das Steuergerät weiter. Die Verbindung 504 kann beispielsweise durch einen Datenbus erfolgen, über individuelle Signalleitungen, oder über eine Kombination daraus. Weitere Steuerinformationen von anderen Komponenten oder Aggregaten des Fahrzeugs können dem Steuergerät 500 über den Datenbus zugeführt werden. Das oder die Beleuchtungsmittel können vom Steuergerät direkt angesteuert und eingeschaltet werden, oder über ein dem oder den Beleuchtungsmitteln zugeordneten Steuergerät (nicht gezeigt), welches auch über einen weiteren Datenbus mit anderen Komponenten des Kraftfahrzeugs verbunden sein kann. Falls erforderlich können ansonsten voneinander getrennte Datenbusse über einen oder mehrere entsprechende Gateways Daten miteinander austauschen, wobei der Austausch uni- oder bidirektional erfolgen kann. Das Steuergerät führt Programminstruktionen aus, welche vom Sensor kommende Daten, die eine Einstellung des Rückspiegels anzeigen, auswerten und das oder die Beleuchtungsmittel während der Einstellung des Rückspiegels einschalten.

## Patentansprüche

1. Einstellhilfe für einen Rückspiegel (108) in einem Kraftfahrzeug (100), wobei in räumlicher Nähe zu einem oder mehreren Rändern eines Heckfensters (104) oder am Heck des Kraftfahrzeugs ein oder mehrere Beleuchtungsmittel (102; 110, 112, 114) so angeordnet sind, dass, wenn sich das Kraftfahrzeug (100) in einer dunklen Umgebung befindet und das oder die Beleuchtungsmittel (102; 110, 112, 114) eingeschaltet sind, sich der Rand des Heckfensters (104) oder eine seitliche Kontur des Kraftfahrzeugs (100) bei einem Blick in den Rückspiegel (108) von der Umgebung hinter dem Kraftfahrzeug (100) zumindest bereichsweise abhebt, **dadurch gekennzeichnet, dass** ein erstes Mittel (500, 502) vorgesehen ist, welches das oder die Beleuchtungsmittel (102; 110, 112, 114) automatisch einschaltet, wenn eine Einstellung des Rückspiegels (108) erforderlich wird, wobei die Einstellung des Rückspiegels als erforderlich angenommen wird, wenn eine Veränderung der Einstellung des Fahrersitzes erkannt wurde.

2. Einstellhilfe nach Anspruch 1, **dadurch gekennzeichnet, dass** Mittel zur Erkennung einer Veränderung einer Einstellung eines Fahrersitzes vorgesehen sind.

3. Einstellhilfe nach Anspruch 1, **dadurch gekennzeichnet, dass** zweite Mittel vorgesehen sind, welche das oder die Beleuchtungsmittel nach erfolgter Einstellung des Rückspiegels während eines festgelegten oder einstellbaren Zeitraums weiter eingeschaltet halten.

4. Einstellhilfe nach Anspruch 1, **dadurch gekennzeichnet, dass** Mittel zur Erkennung einer Belastung eines Fahrersitzes mit einem bestimmten Mindestgewicht vorgesehen sind, und dass das erste Mittel das oder die Beleuchtungsmittel unabhängig von anderen dazu vorgesehenen Signalen nicht einschaltet, wenn ein Fahrersitz weniger als mit dem Mindestgewicht belastet wird.

5. Einstellhilfe nach einem der vorhergehenden Ansprüche, **dadurch gekennzeichnet, dass** das erste Mittel (500, 502) das Beleuchtungsmittel nur unterhalb einer bestimmten Geschwindigkeit oder bei ausgeschaltetem Motor des Fahrzeugs einschaltet.

## Claims

1. Adjustment aid for a rearview mirror (108) in a motor vehicle (100), wherein one or more lighting means (102; 110, 112, 114) are arranged in the spatial vicinity of one or more edges of a rear window (104) or at the rear of the motor vehicle in such a way that, when the motor vehicle (100) is situated in dark surroundings and the one or more lighting means (102; 110, 112, 114) are switched on, the edge of the rear window (104) or a lateral contour of the motor vehicle (100) stands out, at least in portions, from the surroundings behind the motor vehicle (100) when the rearview mirror (108) is looked at, **characterized in that** a first means (500, 502) is provided, said means automatically switching on the one or more lighting means (102; 110, 112, 114) when an adjustment of the rearview mirror (108) becomes necessary, wherein the adjustment of the rearview mirror is assumed to be necessary if a change in the driver seat setting was identified.

2. Adjustment aid according to Claim 1, **characterized in that** means are provided for identifying a change in a driver seat setting.

3. Adjustment aid according to Claim 1, **characterized in that** second means are provided, said second means continuing to keep the one or more lighting means switched on during a fixed or adjustable time period after the rearview mirror was adjusted.

4. Adjustment aid according to Claim 1, **characterized in that** means are provided for identifying loading of a driver seat with a certain minimum weight and **in that** the first means does not switch on the one or more lighting means if a driver seat is loaded with less than the minimum weight, independently of other signals that are provided to this end.

5. Adjustment aid according to any one of the preceding claims, **characterized in that** the first means (500, 502) only switches on the lighting means below a certain speed or when the motor of the vehicle is switched off.

## Revendications

1. Aide au réglage pour un rétroviseur (108) de véhicule automobile (100), sachant qu'à proximité immédiate d'un ou plusieurs bords d'une vitre arrière (104) ou à l'arrière du véhicule automobile sont disposés un ou plusieurs moyens d'éclairage (102 ; 110, 112, 114) de telle manière que si le véhicule automobile (100) se trouve dans un environnement sombre et le ou les moyens d'éclairage (102 ; 110, 112, 114) sont allumés, le bord de la vitre arrière (104) ou un profil latéral du véhicule automobile (100) se détache au moins en partie, lors d'un coup d'œil jeté dans le rétroviseur (108) à l'environnement derrière le véhicule automobile (100), **caractérisée en ce qu'**un premier moyen (500, 502) est prévu, lequel allume automatiquement le ou les moyens d'éclairage (102 ; 110, 112, 114), si un réglage du rétroviseur (108) est nécessaire, sachant que le réglage du rétroviseur est supposé comme étant nécessaire, si une modification du réglage du siège du conducteur a été identifiée.

2. Aide au réglage selon la revendication 1, **caractérisée en ce que** des moyens d'identification d'une modification d'un réglage d'un siège de conducteur sont prévus.

3. Aide au réglage selon la revendication 1, **caractérisée en ce que** des deuxièmes moyens sont prévus, lesquels continuent à maintenir allumé(s) le ou les moyens d'éclairage après réglage effectué du rétroviseur pendant une période de temps déterminée ou pouvant être réglée.

4. Aide au réglage selon la revendication 1, **caractérisée en ce que** des moyens d'identification d'une charge d'un siège de conducteur avec un poids minimal déterminé sont prévus et **en ce que** le premier moyen n'allume pas le ou les moyens d'éclairage indépendamment d'autres signaux prévus à cet effet, si un siège de conducteur est chargé de façon inférieure au poids minimal.

5. Aide au réglage selon l'une quelconque des revendications précédentes, **caractérisée en ce que** le premier moyen (500, 502) allume le moyen d'éclairage uniquement en dessous d'une vitesse déterminée ou lorsque le moteur du véhicule est arrêté.
